# EUROPEAN PATENT APPLICATION

(11) **EP 4 723 256 A1**
(43) Date of publication of application: **08.04.2026**
(21) Application number: 24874882.4
(22) Date of filing: 13.09.2024
(51) Int. Cl.: H01M 8/249, H01M 8/04119, H01M 8/04082, B64U 50/32, H01M 8/04223

(54) **FUEL CELL MODULE, FUEL CELL SYSTEM USING SAME, AND OPERATING METHOD THEREOF**

(30) Priority: 06.10.2023 KR 20230133827; 06.10.2023 KR 20230133828; 06.10.2023 KR 20230133829
(71) Applicant: Hydrogen Butterfly, Seongnam-si, Gyeonggi-do 13201 (KR)
(72) Inventor: CHO, Ilhee, Seongnam-si, Gyeonggi-do 13583 (KR)
(74) Representative: Beck & Rössig European Patent Attorneys
(86) International application number: PCT/KR2024/014042
(87) International publication number: WO 2025/075324

(57) **Abstract**

A fuel cell module of the present invention may comprise: a rotating body; and at least one stack connected to the rotating body such that the position thereof changes by means of rotation of the rotating body.

## Description

### Technical Field

The present invention relates to a fuel cell module, a fuel cell system using the same, and an operating method thereof, and more particularly, to a fuel cell module capable of improving performance and reducing weight of a fuel cell by applying a new cooling method and a water management method, a fuel cell system using the same, and an operating method thereof.

### Background Art

A fuel cell is a kind of power generation apparatus that generates electrical energy by electrochemically reacting chemical energy of fuel without converting the chemical energy into thermal energy. A fuel cell is considered an efficient and environmentally friendly alternative to existing internal combustion engines or chemical batteries. Unlike an existing battery, a fuel cell may continuously generate electricity and have higher energy generation efficiency when only hydrogen and oxygen are supplied.

Such a fuel cell is a power generation system that produces electricity by directly reacting hydrogen and oxygen and directly converts chemical reaction energy of hydrogen contained in a hydrocarbon-based material such as liquefied natural gas (LNG), liquefied petroleum gas (LPG), methanol (CH₃OH), ethanol (C₂H₅OH), gasoline, and the like into electrical energy using a reformer, and an electrochemical reaction occurs at a cathode in which a reduction reaction of oxygen, which is an oxidizer, occurs and at a cathode in which an oxidation reaction of hydrogen, which is a fuel, occurs, thereby generating electricity, heat, water, and the like.

A fuel cell is classified as a phosphoric acid fuel cell, a molten carbonate fuel cell, a solid oxide fuel cell, a polymer electrolyte type, an alkaline fuel cell, or the like depending on the type of electrolyte used. Each of these fuel cells is basically operated by the same principle, but they differ in the type of fuel used, operating temperature, catalyst, and electrolyte.

In this case, in order to supply air to the fuel cell, the air supply device used is comprised of a compressor. Due to the characteristics of the compressor, when the pressure and the flow rate do not match preset values, surging and overheating occur. In addition, as compressed air needs to be supplied, a high-pressure battery is required.

That is, in the conventional fuel cell system, a load should be added according to the use of the air supply device when the air supply device is used, and it is necessary to predict the amount of hydrogen and oxygen required before the load is added, sufficiently supply the hydrogen and oxygen into a stack, and then add the load. This causes the control of the system and hardware to become complicated and the response speed of the fuel cell system to decrease.

In addition, in the case of the conventional fuel cell system, an anode controls the amount and pressure of hydrogen using a pressure control valve, and a cathode controls the amount and pressure of air using a compressor and a regulator in an air supply device, and it is difficult to adjust the flow rate and pressure due to a difference between a supply method and a control method of a reaction gas between the two reactions.

The amount of exhaust gas of hydrogen of the anode has been controlled using a purge valve.

In this case, the anode performs a dead end operation to control the amount of hydrogen inside the stack and increase fuel efficiency of the fuel cell through pressure control using a pressure control valve located before the stack in a state in which the pipe at the rear end of the stack is blocked, and when hydrogen does not flow but stagnates and then the purge valve is opened for a short time, hydrogen is instantaneously discharged to the outside and the pressure of the anode is instantaneously reduced.

In the case of the cathode, the air supplied through the compressor, which is the air supply device, continuously flows through the cathode of the stack, and the pressure regulator located at the rear end of the stack changes the orifice inside the regulator to control the pressure, so that the air continues to flow.

In this case, the gas control of the different anode and cathode generates a pressure difference between the two electrodes, which causes a very thin film, which is one of the components of the membrane electrode assembly (MEA) inside the stack, to be stressed and eventually damaged, thereby resulting in a problem of deteriorating durability.

In addition, since the air supply device compresses and supplies air, high-temperature air is supplied. In this case, a cooling device such as an intercooler capable of cooling high-temperature air is provided between the air supply device and the fuel cell stack.

A conventional fuel cell system has a problem in that the volume of the fuel cell system increases because the air supply device, the high-pressure battery, the cooling device, and the humidifier occupy a significant portion volume, it has been difficult to miniaturize the fuel cell system, and there has been a limitation in designing a fuel cell in other fields.

In addition, fuel cells not only supply power for industrial, home, and vehicle driving, but also receive attention as a main power source of a drone and urban air mobility (UAM).

Specifically, the performance of a fuel cell increases as the concentration of oxygen supplied to the cathode increases during the operation of the fuel cell, and the output of the fuel cell increases more than twice as much as when power is generated using air when pure oxygen is used, and thus the operation of the fuel cell using pure oxygen is an energy source suitable for use in aviation, drones, air taxis, and the like in which weight is an important factor.

When pure oxygen is used, the air supply system occupying the largest volume and weight in the fuel cell system can be removed, and the heat generated according to an increase in the performance of the fuel cell is lowered, and thus the components of the cooling system can be miniaturized, which is advantageous for weight reduction.

In addition, in places like NASA in the United States, ultra-cured liquefied gas storage tanks using composite materials are currently being developed and rotating body types are being tested. Accordingly, the operation of the fuel cell using pure oxygen is very advantageous in terms of weight reduction.

### Detailed Description of Invention

### Technical Problem

An object of the present invention relates to a fuel cell module for an efficient liquid removal and fuel cell cooling method of reducing the weight and price of a fuel cell system.

The purpose of the present invention is to provide a fuel cell system which can be miniaturized by removing components necessary for supplying air when a fuel cell is operated using pure oxygen, and can easily and quickly remove water, which is a product, from a plurality of stacks using one purge valve for each of an anode and a cathode, and an operating method thereof.

### Technical Solution

A fuel cell module according to an embodiment includes a rotating body and one or more stacks that are radially connected to the rotating body and of which positions are changed by rotation of the rotating body.

In the fuel cell module, the one or more stacks may be obliquely connected to the rotating body.

In the fuel cell module, the one or more stacks may include a first stack and a second stack, and the first stack and the second stack may be disposed parallel to each other.

In the fuel cell module, the one or more stacks may include a first stack and a second stack, and the first stack and the second stack may be disposed obliquely to each other.

In the fuel cell module, the one or more stacks may include a first stack and a third stack, and the first stack may be located higher than the third stack based on a rotation axis of the rotating body.

In the fuel cell module, the one or more stacks may include a second stack that is parallel to the first stack and located higher than the third stack, and the third stack may be located between the first stack and the second stack on a first axis perpendicular to a rotation axis of the rotating body.

In the fuel cell module, the one or more stacks may include a discharge line through which liquid moved in a first direction may be discharged by the rotation of the rotating body, and the first direction may be away from the center of the rotating body.

In the fuel cell module, a valve configured to discharge the liquid discharged from the discharge line to the outside may be further included.

In the fuel cell module, the one or more stacks may be rotatably connected to one surface of the rotating body and configured to adjust an angle formed with a ground.

In the fuel cell module, the one or more stacks may be disposed around the rotating body to surround an outer circumferential surface of the rotating body.

In the fuel cell module, the one or more stacks may be connected to the rotating body in a direction in which the one or more stacks gather toward an upper portion or a lower portion of the rotating body.

A fuel cell system according to an embodiment includes a fuel cell module that receives an oxidizer and hydrogen and generates electrical energy and a motor that receives energy generated by the fuel cell module, in which the fuel cell module includes a rotating body and one or more stacks that are radially connected to the rotating body and of which positions are changed by rotation of the rotating body.

A propulsion device using a fuel cell according to an embodiment includes a fuel cell module that receives an oxidizer and hydrogen and generates electrical energy, a motor that receives energy generated by the fuel cell module, and a propeller connected to the motor to provide a driving force, in which the fuel cell module includes a rotating body connected to the motor, and one or more stacks that are radially connected to the rotating body and of which positions are changed by rotation of the rotating body. According to another aspect of the present invention, there is provided a fuel cell system including a hydrogen tank in which gaseous or liquid hydrogen is stored, a rotating body, and a stack connected to an outer surface of the rotating body, wherein air is supplied to the stack by rotation of the rotating body and the stack, and hydrogen is supplied from the hydrogen tank to generate electrical energy.

In an embodiment, as the number of rotations of the rotating body increases, an amount of air supplied to the stack may increase.

In an embodiment, air may be supplied to the stack to cool the stack.

In an embodiment, as the number of rotations of the rotating body increases, a cooling amount of the stack may increase.

According to another aspect of the present invention, there is provided a fuel cell system including an oxidizer supply unit including one or more of an oxidizer tank, an air blower, and an air compressor, a hydrogen tank in which gaseous or liquid hydrogen is stored, a rotating body, and a stack connected to an outer surface of the rotating body, wherein an oxidizer is supplied to the stack by the oxidizer supply unit, hydrogen is supplied from the hydrogen tank to generate electrical energy, and air is supplied to the stack by rotation of the rotating body and the stack to cool the stack.

In an embodiment, the oxidizer supply unit may include an oxidizer tank, a first pressure control valve for adjusting a pressure of the oxidizer may be disposed between the oxidizer tank and the stack and a second pressure control valve for adjusting a pressure of the hydrogen may be disposed between the hydrogen tank and the stack.

In an embodiment, as the number of rotations of the rotating body increases, a cooling amount of the stack may increase.

Another aspect of the present invention includes a hydrogen tank in which gaseous or liquid hydrogen is stored, a rotating body, a stack connected to an outer surface of the rotating body, wherein air is supplied to the stack by rotation of the rotating body and the stack, hydrogen is supplied from the hydrogen tank to generate electrical energy, and one or more purge valves connected to the stack to discharge a product according to a reaction of oxygen and hydrogen from the stack to the outside.

Another aspect of the present invention includes an oxidizer supply unit including one or more of an oxidizer tank, an air blower, and an air compressor, a hydrogen tank in which gaseous or liquid hydrogen is stored, a stack that generates electrical energy when oxygen and hydrogen are supplied from the oxidizer supply unit and the hydrogen tank, respectively, and one or more purge valves connected to the stack to discharge a product according to a reaction of oxygen and hydrogen from the stack to the outside.

In an embodiment, the stack may be provided as one or more stacks.

In an embodiment, a driving unit that provides a rotational force and a rotating body that is rotatable by a rotational force of the driving unit may be further included, and one side of the stack is radially provided outside the rotating body.

In an embodiment, the product may be generated inside the stack, then moved to one side of the stack or the separator plate inside the stack by the rotation of the rotating body, discharged from the stack by opening the purge valve, and then discharged to the outside through the purge valve.

In an embodiment, one side of the stack may be provided to be inclined in a diagonal direction to the outside of the rotating body.

In an embodiment, a cathode discharge line and an anode discharge line connected to the stack may be further included, and the purge valve may include a cathode purge valve and an anode purge valve which are provided in the cathode discharge line and the anode discharge line, respectively, and are adjustable to open or close.

Another aspect of the present invention includes supplying an oxidizer and hydrogen to a stack, generating electrical energy by a reaction between the supplied oxidizer and hydrogen in the stack, and discharging a product generated by being liquefied by the reaction of the oxidizer and the hydrogen within the stack and impurities to the outside by opening a cathode purge valve and an anode purge valve.

Another aspect of the present invention includes a first tank in which an oxidizer is stored, a second tank in which hydrogen is stored, a stack that includes a cathode to which an oxidizer is supplied from the first tank and an anode to which hydrogen is supplied from the second tank, and generates electrical energy based on a reaction of the oxidizer supplied to the cathode and hydrogen supplied to the anode, one cathode purge valve configured to discharge a product generated in the cathode according to the reaction, and one anode purge valve configured to discharge a product generated in the anode according to the reaction.

In an embodiment, the cathode purge valve may be connected to a first path through which the product is discharged from the cathode, and the anode purge valve may be connected to a second path through which the product is discharged from the anode.

In an embodiment, the first path may extend to the first tank, the second path may extend to the second tank, the first path may include a first pressure control valve for adjusting a pressure of the cathode, and the second path may include a second pressure control valve for adjusting a pressure of the anode.

In an embodiment, a processor configured to control at least one of the first pressure control valve and the second pressure control valve such that an intensity difference between the pressure of the anode and the pressure of the cathode does not exceed a predetermined value may be further included.

In an embodiment, the stack may include a first stack and a second stack and the first tank and the second tank may be connected to the first stack and the second stack, respectively.

In an embodiment, a driving unit that provides a rotational force, and a rotating body rotatable by a rotational force of the driving unit may be further included, and at least a portion of the product may be separated from the stack according to the rotation of the rotating body.

In an embodiment, an angle formed by the rotation axis of the rotating body and the stack may be adjustable.

### Advantageous Effects

According to an embodiment of the present invention, a fuel cell module for an efficient liquid removal and fuel cell cooling method of reducing the weight and price of a fuel cell system can be provided.

According to an embodiment, components required for supplying air can be removed by supplying pure oxygen, thereby allowing for miniaturization and a reduction in weight and cost. Furthermore, water, which is a product, can be easily, quickly, and efficiently removed from a plurality of stacks using one purge valve.

### Description of Drawings

FIGS. 1 and 2A are diagrams for describing a fuel cell system according to an embodiment.
FIG. 2B is a diagram for describing a fuel cell system according to another embodiment.
FIG. 3 is a diagram for describing a fuel cell module according to an embodiment.
FIG. 4 is a diagram for describing a fuel cell module according to another embodiment.
FIG. 5 is a diagram for describing a fuel cell module according to still another embodiment.
FIG. 6 is a diagram for describing a fuel cell module according to yet another embodiment.
FIG. 7 is a diagram for describing a fuel cell module according to yet another embodiment.
FIGS. 8 and 9 are diagrams for describing the movement and discharge of a liquid reactant in a fuel cell module.
FIG. 10 is a flowchart illustrating an operating method of a fuel cell system according to an embodiment of the present invention.
FIG. 11 is a configurational diagram illustrating a fuel cell system according to another embodiment of the present invention.

### [Modes of the Invention]

Since it is intended to clearly describe the spirit of the present invention to those skilled in the art, the present invention is not limited to the embodiments described in the present specification, and the scope of the present invention should be construed as including modifications or variations that do not depart from the spirit of the present invention.

The terms used in the present specification have been selected as general terms currently widely used in consideration of the functions in the present invention, but these terms may vary depending on the intention of those skilled in the art to which the present invention pertains, precedents, or the emergence of new technologies. However, when a specific term is defined and used with any meaning, the meaning of the term will be separately described. Therefore, the terms used in the present specification should be interpreted based on the substantial meaning of the terms and the content throughout the present specification, not the simple names of the terms.

The accompanying drawings of the present specification are intended to easily describe the present invention, and the shapes shown in the drawings may be exaggerated as necessary to help understanding of the present invention, and thus the present invention is not limited by the drawings.

In the present specification, when it is determined that detailed description of a known configuration or function related to the present invention may obscure the gist of the present invention, the detailed description thereof will be omitted as necessary.

Meanwhile, an open cathode type fuel cell, which is one type of fuel cell, is a fuel cell in which a stack is lightened, and has a structure in which a cathode is open without a dedicated coolant passage. A method of cooling the stack by supplying air to a cathode electrode exposed to the air and through the flow of air is applied thereto.

A closed cathode type fuel cell, which is another type of fuel cell, is cooled using a dedicated coolant flow path provided in a bipolar plate.

The fuel cell of the present invention may be formed as the closed cathode type as well as the open cathode type fuel cell.

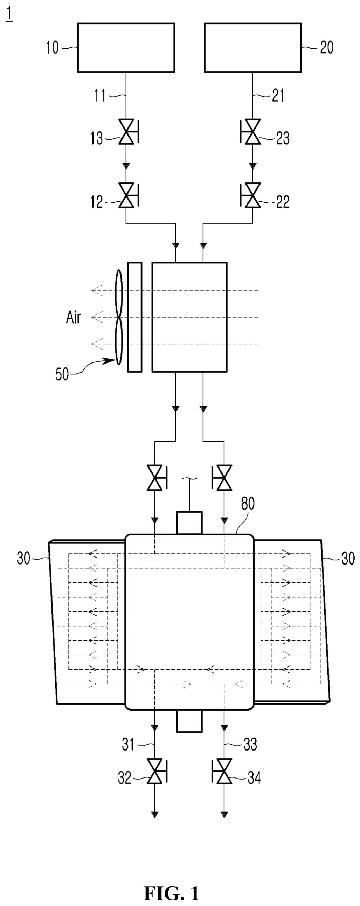

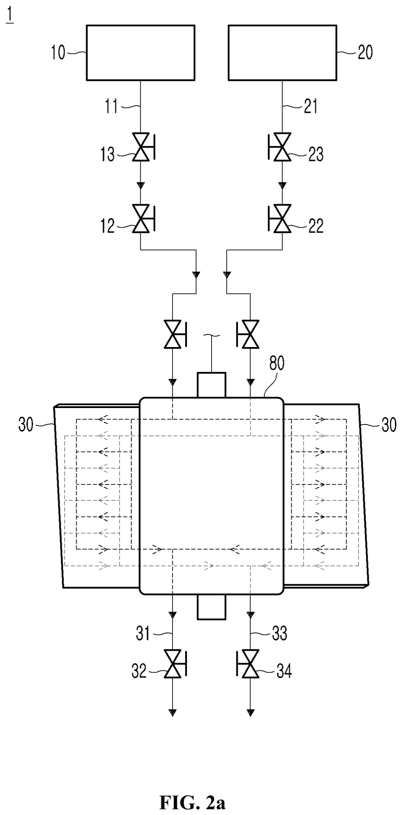

FIGS. 1 and 2A are diagrams illustrating a fuel cell system according to an embodiment.

Referring to FIG. 1, a fuel cell system 1 according to an embodiment of the present invention may include an oxidizer tank 10, a hydrogen tank 20, and a stack 30. The stack 30 may be included in a fuel cell power pack. That is, the fuel cell power pack may include the stack 30 and an operating device. In addition, the operating device may include a fan, a valve, a sensor, other devices, and the like.

The fuel cell system 1 may include a fuel supply tank and an oxidizer supply unit. Specifically, the oxidizer supply unit and the fuel supply tank may include the oxidizer tank 10 and the hydrogen tank 20. The oxidizer tank 10 and the hydrogen tank 20 may be disposed adjacent to each other as separate tanks or may be separately disposed without being adjacent to each other.

The oxidizer tank 10 may store oxygen (O₂) in a gaseous or liquid state. The oxidizer tank 10 may supply pure or impure oxygen (i.e., having a concentration of 100% or less) to the stack 30. In this case, oxygen stored in the oxidizer tank 10 may be compressed and stored in a gaseous state or stored in a liquid state. For example, the internal pressure of the oxidizer tank 10 may be 700 bar but is not limited thereto. In addition, when using liquid oxygen, the temperature of the reactant supplied by mounting and/or using a vaporizer may be set to a target value. The oxidizer tank 10 may supply not only oxygen but also air in some cases. Accordingly, the oxidizer tank may also be referred to as an air tank.

The fuel cell system 1 may include an oxygen supply line 11 capable of supplying oxygen by connecting the oxidizer tank 10 and the stack 30. The oxygen supply line 11 may include at least one pressure reducing valve (PRV) 13 and an oxygen supply valve 12. Specifically, the at least one oxygen decompression valve 13 may reduce the pressure of oxygen in order for oxygen compressed and stored at a high pressure to be stably supplied to the stack 30 at a high pressure.

The oxygen supply valve 12, the hydrogen supply valve 22, the oxygen decompression valve 13, and the hydrogen decompression valve 23 may be opened using a 12 V or 24 V battery but are not limited thereto. In addition, when the liquid oxidizer tank is used, a separate vaporizer may be mounted to provide a smooth supply of oxygen.

The oxidizer tank 10 may supply oxygen at a higher concentration to the stack 30 than supplying air having an oxygen concentration of about 21% by supplying pure oxygen to the stack 30. Accordingly, the increased oxygen concentration increases an oxygen reduction reaction rate, which may increase the efficiency of electrical energy generation. Therefore, the use of pure oxygen through the oxidizer tank 10 can improve the output of a polymer-type fuel cell system and thus may be suitable for aviation requiring weight reduction.

In addition, as the oxygen or vaporized oxygen compressed in the fuel cell system 1 is supplied using a vaporizer (which may be removed when using gaseous oxygen) and the oxygen supply valve 12, a separate air supply device, a high-voltage battery used to drive the air supply compressor of the air supply device, a DC-DC converter, and the like can be removed, and thus weight reduction and miniaturization are possible. Accordingly, the fuel cell system 1 of the present invention can be made lightweight and miniaturized and thus can be designed for application in not only aviation but also a wide range of fields.

However, it is not limited thereto, and the fuel cell system 1 may supply air to the stack 30 through an air compressor or an air blower as in the related art. That is, the oxidizer supply unit may include one or more of an oxidizer tank, an air blower, and an air compressor.

In addition, as will be described below, the fuel cell system 1 may supply air into the stack by rotation of a rotating body and the stack.

In an embodiment, the fuel cell system 1 may cool the stack by the rotation of the rotating body and the stack 30 while supplying the oxidizer to the stack 30 by one or more of the oxidizer tank, the air blower, and the air compressor.

Meanwhile, the operation of the stack 30 using pure oxygen may not only be applied to a rotating body 80 to be described below but may also be used in a packed configuration like a secondary battery pack.

The hydrogen tank 20 may store hydrogen (H₂) in a gaseous or liquid form. Hydrogen stored in the hydrogen tank 20 may be compressed and stored in a gaseous state or stored in a liquid state. For example, the internal pressure of the hydrogen tank 20 may be 700 bar but is not limited thereto. In addition, when liquid oxygen is used, a vaporizer can be used to adjust the supplied reactants to a desired temperature.

The fuel cell system 1 may include a hydrogen supply line 21 capable of supplying hydrogen by connecting the hydrogen tank 20 and the stack 30. The hydrogen supply line 21 may include at least one hydrogen PRV 23 and a hydrogen supply valve 22. Specifically, the at least one hydrogen decompression valve 23 may reduce the pressure of hydrogen in order to stably supply hydrogen compressed and stored at a high pressure to the stack 30, and the hydrogen supply valve 22 is used to stably supply hydrogen to the stack 30. The hydrogen supply valve 22 and the hydrogen decompression valve 23 may be opened using a 12 V or 24 V battery but are not limited thereto.

The oxygen supply line 11 may include a vaporizer that assists the vaporization of oxygen to stably supply liquefied oxygen to the stack 30. In addition, the hydrogen supply line 21 may include a vaporizer that assists the vaporization of hydrogen to stably supply liquefied hydrogen to the stack 30. The oxygen supply line 11 or the hydrogen supply line 21 may include a pressure sensor (not shown) and a temperature sensor (not shown) capable of checking pressure and temperature but is not limited thereto.

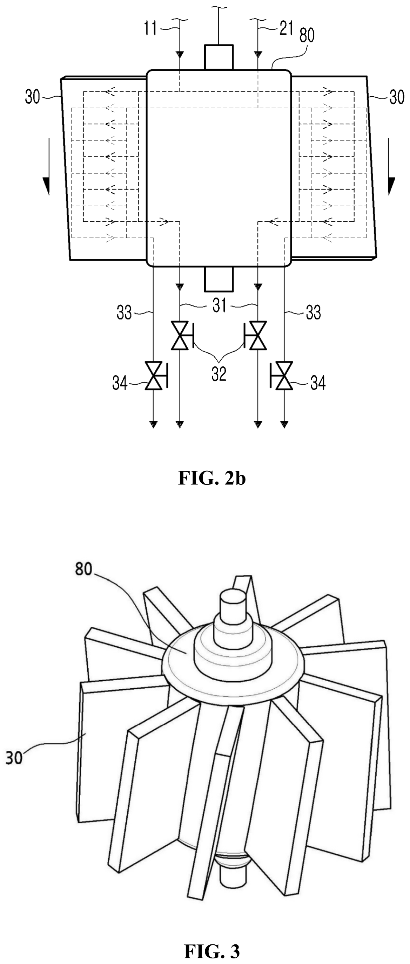

In addition, as necessary, as shown in FIG. 1, a cooling fan 50 for cooling the oxygen supply line 11 and the hydrogen supply line 21 may be further provided, and as shown in FIG. 2, the cooling fan 50 may be omitted.

When oxygen and hydrogen are supplied from the oxidizer tank 10 and the hydrogen tank 20, respectively, the stack 30 generates electrical energy.

When the oxidizer tank 10 is opened to start oxygen supply in the oxidizer tank 10, the at least one oxygen decompression valve 13 lowers oxygen to an appropriate pressure. Oxygen lowered to an appropriate pressure is supplied to the stack 30 at an appropriate pressure using the oxygen supply valve 12.

When the hydrogen tank 20 is opened to start hydrogen supply in the hydrogen tank 20 in the same manner as the oxygen supply method, the at least one hydrogen PRV 23 lowers the hydrogen to an appropriate pressure. Hydrogen lowered to an appropriate pressure is supplied to the stack 30 using the hydrogen supply valve 22. The stack 30 supplied with the reaction gas is ready to operate while the voltage rises to an open circuit voltage (OCV). Accordingly, electricity generated by the stack 30 may be supplied to components included in the fuel cell system 1. Therefore, autonomous operation of the fuel cell system 1 can be made possible.

In this case, through opening and closing according to easy control of the oxygen supply valve 12, oxygen may be smoothly supplied to the cathode. Accordingly, the response speed according to the load of the fuel cell system 1 may be improved. In a general fuel cell system, the response speed of a system is determined according to the revolutions per minutes (RPM) increase speed of a compressor or blower that supplies air. In the fuel cell system 1 of the present invention, there is no air supply device composed of a compressor, an intercooler, a humidifier, and the like, and since hydrogen and oxygen, which are reaction gases, are supplied through the supply pressure in the stack, there is an advantage in that the operation time proceeds very quickly.

The stack 30 may be in a form in which cells composed of a separator plate, a membrane electrode assembly (MEA), and other accessory components are stacked. In this case, hydrogen is supplied to the anode, and oxygen is supplied to the cathode.

The supplied reaction gas reacts on the catalyst in a catalyst layer of the MEA in the fuel cell stack. In this case, water is produced as a reaction product, and heat is generated as a result of the reaction. A portion of the water, which is a product, is liquefied inside the stack 30, and since the liquefied water is a main cause of lowering the performance of the stack 30 and degrading the durability performance, the liquefied water should necessarily be discharged to the outside of the stack 30.

For example, in order to discharge the water liquefied inside the cell to the outside of cell in the stack 30, the conventional technology designed the structure of a cathode separator plate in the stack 30 to facilitate water discharge. A 3D porous body was added to the separator plate of the conventional technology to facilitate the discharge of the liquefied water. However, this increases the weight and volume of the stack due to additional components. In addition, this has a disadvantage in that the price of the stack is increased by requiring the manufacture of an additional mold for processing a complex structure.

In another conventional technology, the 3D porous body is removed and the shape of the channel of the separator plate is bent to change the flow of the reaction gas, and thereby the liquid is easily discharged through the change in the direction and pressure of the flow. However, even in this case, there is a problem in that the structure of the separator plate is complicated and the processing cost increases. Another conventional technology adjusts the operating conditions of the fuel cell to remove the liquid in the stack. However, in this method, the driving method becomes complicated, making it difficult to control, and the problem of price increase and reduction of durability performance occurs.

In order to discharge liquefied water, the fuel cell system 1 of the present invention may include a cathode discharge line 31 and an anode discharge line 33 capable of discharging liquefied water, and a cathode purge valve 32 and an anode purge valve 34 capable of adjusting the opening and closing of the cathode discharge line 31 and the anode discharge line 33. That is, functions of the cathode purge valve 32 and the anode purge valve 34 are used to correct the concentration of hydrogen and oxygen, which are reaction gases in the anode and the cathode, and to remove the generated liquid.

For example, as the stack 30 is operated, in the case of the anode, as the amount of oxygen, nitrogen, and water vapor diffused through a membrane from the cathode increases, the concentration of hydrogen decreases. This lowers the voltage of the stack 30, and as a result, the stack 30 cannot be operated. In this case, when the anode purge valve 34 is opened, pure hydrogen is supplied from the hydrogen tank 20 to the stack 30, and the liquid water in the anode is discharged to the outside, so that the concentration of hydrogen in the anode is increased again and a reaction area is secured, allowing the stack 30 to be stably operated.

In addition, in the case of the cathode, when the cathode purge valve 32 is opened, the concentration of hydrogen in the cathode is increased again, allowing the stack 30 to be stably operated.

In this case, hydrogen (H₂) is supplied to the anode, and oxygen (O₂) is supplied to the cathode.

In addition, an oxidation reaction of the supplied hydrogen occurs at the anode, hydrogen is separated into protons (H⁺) and electrons (e⁻), and protons are moved to the cathode through the membrane. In addition, electrons are moved to the cathode through a circuit connecting the anode and the cathode, and electrical energy is generated.

In the cathode, protons and electrons are moved through the membrane and the circuit, and when oxygen is supplied, an oxygen reduction reaction occurs. In this case, water is produced as a product, and heat is generated as a result of the reaction.

Here, the heat may be cooled by a cooling system such as a radiator. In addition, it is necessary to perform management of periodically discharging the product (i.e., the generated and liquefied water).

To this end, the fuel cell system 1 of the present invention may further include the cathode purge valve 32.

The cathode purge valve 32 may be connected to the stack 30 to discharge a product (e.g., liquefied water (H₂O)) according to a reaction of oxygen and hydrogen from the stack 30 to the outside. In this case, since the pressure inside the stack 30 is higher than the outside, when the cathode purge valve 32 is opened, water may be discharged to the outside by a pressure difference.

The pressure of the anode and cathode can be easily controlled by opening and closing the cathode discharge line 31 and the anode discharge line 33 using the same cathode purge valve 32 and anode purge valve 34.

As described above, the oxygen PRV 13 may reduce the pressure of oxygen in order to stably supply the oxygen compressed and stored at a high pressure to the stack 30. The hydrogen PRV 23 may lower the pressure of hydrogen in order to stably supply the hydrogen compressed and stored at a high pressure to the stack 30.

That is, the oxygen PRV 13 is a first pressure control valve for adjusting the pressure of the cathode, and the hydrogen PRV 23 is a second pressure control valve for adjusting the pressure of the anode. At least one of the first pressure control valve and the second pressure control valve may be controlled such that an intensity difference between the pressure of the anode and the pressure of the cathode does not exceed a predetermined value.

The membrane that is a main component of an electrode membrane assembly used in the fuel cell continues to become thinner to improve the performance of the fuel cell. Therefore, when the pressure of the anode and cathode is not precisely controlled within a predetermined pressure difference, the membrane is damaged due to the pressure difference between the two electrodes, and thus the stack cannot be operated.

In the case of an existing fuel cell system, a supply and discharge method of hydrogen supplied to and discharged from the anode is different from a supply and discharge method of air supplied to a cathode.

In the case of hydrogen, a discharge portion is blocked with the purge valve and the hydrogen within a high-pressure tank is introduced into the stack to adjust the hydrogen concentration inside the stack by adjusting the pressure of the anode in the stack through a pressure drop valve and a pressure control valve.

In the case of the cathode, the air is supplied by adjusting a flow rate through the RPM of a compressor of a supply portion without blocking a discharge portion, and the pressure of the cathode is adjusted by adjusting the pressure at which the compressor supplies air and the orifice inside the pressure control regulator of the discharge portion.

In this case, the anode undergoes dead end operation in which there is no flow of reaction gas, and the cathode undergoes a continuous operation in which air continuously flows. For this reason, it is very difficult to control the pressures of the anode and the cathode to be the same, and when the purge valve of the anode is opened, the pressure of the anode rapidly decreases, and the pressure of the cathode is maintained at a predetermined value through the compressor at the front end of the stack and the pressure control regulator at the rear end of the stack. According to this situation, the pressure difference between the anode and the cathode is rapidly widened, and thus stress is applied to the membrane and eventually the membrane is damaged.

However, since the anode and the cathode of the fuel cell system 1 of the present invention have the same supply and discharge method of the reaction gas, it is easy to maintain and control the pressures of the anode and the cathode to be the same, so that the mechanical stability of the membrane in the MEA of the fuel cell system 1 can be significantly improved.

In addition, since the anode and cathode have the same structure and control method in this simple system, the operating pressure of the fuel cell system can be further increased compared to the existing fuel cell system. As the operating pressure increases, the performance of the fuel cell rapidly increases. A general fuel cell may operate at the operating pressure of about 0.1 to 3 bar. When the operating pressure is increased, the performance of the fuel cell is improved and the size of the pipe can be reduced, and thus there are various advantages. Therefore, most fuel cells for automobiles are currently operating at an operating pressure of 3 bar. However, when the operating pressure increases, the power consumption of the compressor that supplies air rapidly increases, reducing the efficiency of the system, and the pressure difference between the anode and the cathode should be kept constant, which is difficult. In the case of the present invention, since the operating methods of the anode and the cathode are the same and the pressures of the anode and the cathode are easily maintained at the same pressure, the operating pressure of the stack can be easily increased to 3 bar or more, and the performance of the stack can be easily increased through high operating pressure. This can rapidly increase the performance of the fuel cell, which is very advantageous for weight reduction.

Referring to FIG. 2A, the fuel cell system 1 may include one or more stacks 30.

In FIG. 2A, each stack 30 includes a cathode discharge line 31 in which discharge lines of oxygen are gathered into one and an anode discharge line 33 in which discharge lines of hydrogen are gathered into one, and a cathode purge valve 32 and an anode purge valve 34 are provided in the cathode discharge line 31 and the anode discharge line 33, respectively. In this case, hydrogen and oxygen with reduced concentrations and liquefied water in one or a plurality of stacks may be purged using the cathode purge valve 32 and the anode purge valve 34.

Specifically, the cathode purge valve 32 may be connected to the cathode discharge line 31, which is a path through which the product is discharged from the cathode, and the anode purge valve 34 may be connected to the anode discharge line 33, which is a path through which the product is discharged from the anode.

The discharge lines of hydrogen connected to a stack are gathered and connected to one discharge line, the discharge lines of oxygen connected to a stack are gathered and connected to one discharge line, and the one discharge lines come out to the outside. In this case, a purge valve may be located in the discharge line where multiple discharge lines are gathered into one so that hydrogen and oxygen with reduced concentrations and liquefied water within one or more stacks can each be purged using one purge valve. This may reduce the weight, volume, and price of the fuel cell system 1 because the number of purge valves is reduced.

FIG. 2B is a diagram for describing a fuel cell system according to another embodiment.

As described above, the liquid water and the reaction gas (oxygen and hydrogen) may be purged from the plurality of stacks to the outside using one cathode purge valve 32 and one anode purge valve 34, and one or a plurality of cathode purge valves 32 and the anode purge valves 34 may be mounted for each stack 30 as shown in FIG. 2B. In this case, each stack 30 includes a separate cathode discharge line 31 and an anode discharge line 33, and the cathode purge valve 32 and the anode purge valve 34 are installed on each cathode discharge line 31 and each anode discharge line 33, respectively.

FIG. 3 is a diagram for describing a fuel cell module according to an embodiment.

Referring to FIG. 3, the fuel cell module according to an embodiment may include a rotating body 80 and one or more stacks 30. Specifically, the fuel cell module may include the rotating body 80 and one or more stacks 30 connected to the rotating body 80. In this case, the one or more stacks 30 may be connected to the rotating body 80 so that the position of the one or more stacks 30 may be changed by the rotation of the rotating body 80. Although FIG. 3 illustrates ten stacks 30 connected to the rotating body 80, the number of stacks 30 is not limited thereto and may be provided as a single or a plurality of stacks as needed.

The one or more stacks 30 may be disposed around the rotating body 80 to surround an outer circumferential surface of the rotating body 80 (e.g., in a radial shape). Alternatively, at least a portion of the one or more stacks 30 may be inserted into the rotating body 80 or may be disposed on an inner surface of the rotating body 80. Specifically, the one or more stacks 30 may be spaced apart from each other at a predetermined interval, and one side of the stack 30 may be radially connected to the outside (or the outer surface) of the rotating body 80. In this case, the stacks included in the one or more stacks may be disposed parallel to each other. For example, one surface of a first stack may be parallel to one surface of a second stack.

One side of the one or more stacks 30 may be provided to be inclined in a diagonal direction on the outside of the rotating body 80. That is, the one or more stacks 30 may be obliquely connected to the rotating body 80. Accordingly, as the rotating body 80 rotates, the stack 30 positioned to be inclined also moves, and the moving stack 30 moves the surrounding air in a direction perpendicular to the rotation direction. In this case, when the stack 30 is of the open cathode type, since the air supply channel and the air supply channel for cooling are the same, the moving air is not only supplied into a separator plate of the rotating stack but also passes through a cooling fin or a cooling structure located inside the separator plate of the stack, and the stack is cooled. However, it is not limited thereto, and the one or more stacks 30 may be vertically or horizontally connected to the rotating body 80.

In this case, when the number of rotations increases, the intensity of the moving air becomes stronger, and the amount of cooling of the stack increases, so that the temperature of the stack can be easily and quickly lowered. On the other hand, when the number of rotations decreases, the intensity of the moving air becomes weak, and thus the temperature of the stack at an initial stage can be rapidly increased to the operating temperature. That is, the number of rotations may be adjusted to control an optimal operating condition of the fuel cell system 1, which may eliminate a cooling system present in the existing fuel cell system.

Specifically, the conventional open cathode type fuel cell supplies external air to an open cathode flow path using an air blower (or a cooling fan (FAN)) and cools the stack. On the other hand, in the present invention, as the rotating body 80 and the stack 30 rotate, external air may be supplied into the stack, and the stack may be further cooled. Accordingly, a conventional pump, an air blower (or a cooling fan), a three-way valve, an ion remover, a cooling water pipe, and the like may be removed, and a high-voltage battery for driving the pump and a converter for operating the same can be eliminated, so that miniaturization and weight reduction of the fuel cell system are possible.

However, it is not limited thereto, and the stack 30 may be formed in a closed cathode type, and in this case, the stack 30 may be cooled by flowing a cooling fluid through a dedicated coolant flow path.

In addition, the structure of the one or more stacks 30 disposed obliquely may reduce noise generated by the rotation of the stack 30, and reduce power consumed to rotate the rotating body 80.

Meanwhile, one side of the stack 30 may be attached to the rotating body 80 as a whole.

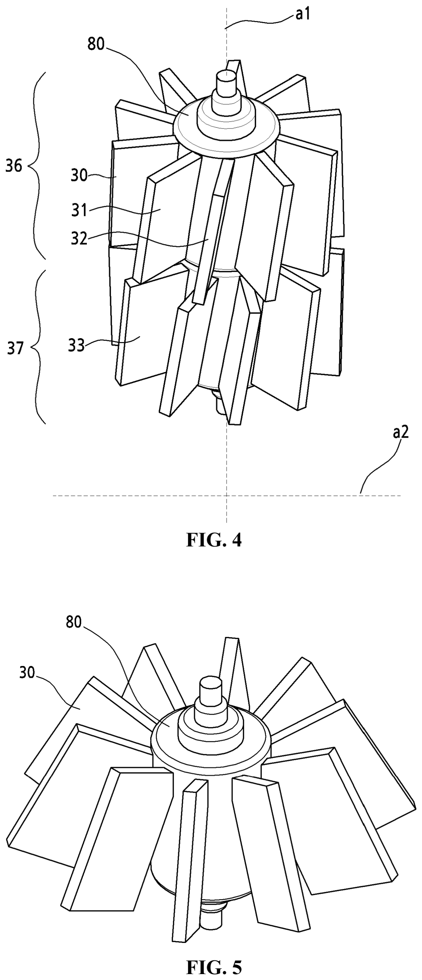

FIG. 4 is a diagram for describing a fuel cell module according to another embodiment.

Referring to FIG. 4, the fuel cell module according to another embodiment may include a rotating body 80 and one or more stacks 30. In this case, unlike the embodiment of FIG. 3, the embodiment of FIG. 4 may include a plurality of stacks 30, 31, 32, and 33 disposed in a plurality of layers.

Specifically, the rotating body 80 may be connected to a stack included in a first layer 36 and a stack included in a second layer 37. In this case, the first layer 36 may be a layer located higher than the second layer 37. Like the fuel cell module of FIG. 4, in order to secure a space for generating an air flow between the stacks 30 while increasing the number of stacks 30, the stacks 30 may be connected to the rotating body 80 in multiple layers.

In this case, the stacks included in the first layer 36 may be alternately disposed with the stacks included in the second layer 37. Specifically, the stacks included in the first layer 36 may include a first stack 31 and a second stack 32 disposed parallel to the first stack 31. In addition, the stacks included in the second layer 37 may include a third stack 33.

In this case, the third stack 33 may be located between the first stack 31 and the second stack 32 on a first axis a2 perpendicular to a rotation axis a1 of the rotating body 80. Specifically, the center point of the third stack 33 may be located between the center point of the first stack 31 and the center point of the second stack 32 on the first axis a2. As described above, by alternately disposing the stacks 31 and 32 of the first layer 36 and the stack 33 of the second layer 37 on the first axis a2 or the horizontal axis, a passage for air circulation can be secured and a burden due to air resistance and the like on the rotation of the rotating body 80 can be reduced.

This may be modified to mount a plurality of stack layers as well as a plurality of rotating bodies.

FIG. 5 is a diagram for describing a fuel cell module according to another embodiment.

Referring to FIG. 5, unlike the fuel cell of FIG. 3, a portion of an area corresponding to one side of the stack 30 may be connected to the rotating body 80. Accordingly, the one or more stacks 30 may be disposed in a direction in which the one or more stacks 30 gather toward an upper portion of the rotating body 80. As a result, the space in which air can flow in the fuel cell module of FIG. 5 may be wider than that of the fuel cell module of FIG. 3.

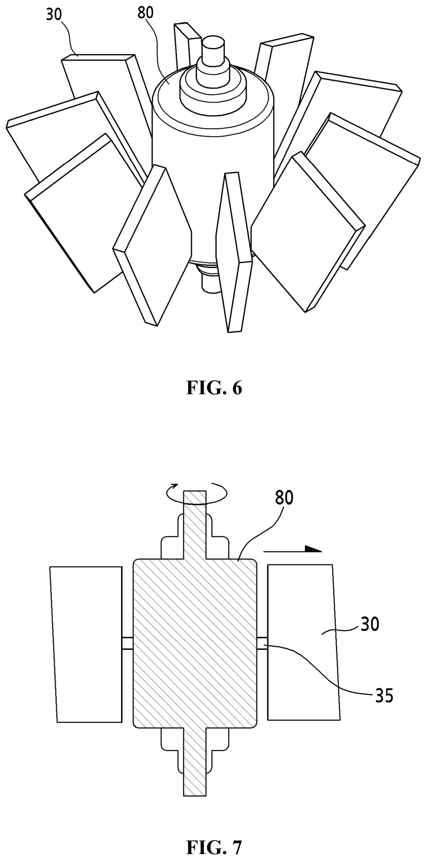

FIG. 6 is a diagram for describing a fuel cell module according to another embodiment.

Referring to FIG. 6, unlike the fuel cell of FIG. 3, a portion of an area corresponding to one side of the stack 30 may be connected to a rotating body 80. Accordingly, one or more stacks 30 may be disposed in a direction in which the one or more stacks 30 gather toward a lower portion of the rotating body 80. The fuel cell module of FIG. 6 may have a shape in which the fuel cell module of FIG. 5 and the portion where the stack 30 is connected to the rotating body 80 are vertically symmetrical. As a result, the space in which air can flow in the fuel cell module of FIG. 6 may be wider than that of the fuel cell module of FIG. 3.

In this way, the angle and shape in which the one or more stacks 30 are connected to the rotating body 80 are not limited to FIGS. 3, 5, and 6 and may vary.

FIG. 7 is a diagram for describing a fuel cell module according to another embodiment. FIG. 7 is a cross-sectional view of the fuel cell module according to another embodiment.

Referring to FIG. 7, the fuel cell module according to another embodiment may include a rotating body 80 and one or more stacks 30. In this case, the one or more stacks 30 may be connected to the rotating body 80 in a shape in which an angle may be adjusted.

The disposition angle of the one or more stacks 30 may be adjusted. Specifically, the one or more stacks 30 may be connected to the rotating body 80 through a link 35. In this case, the link 35 may adjust an angle between the one or more stacks 30 and the ground. Specifically, the link 35 may be connected to a driving unit (e.g., a motor or the like) inside the rotating body 80 to rotate by a control signal to adjust the angle of the one or more stacks 30.

FIG. 7 illustrates a method of adjusting an angle of the stack 30 through the link 35, but a method of adjusting an angle between the stack 30 and the ground is not limited thereto and may vary.

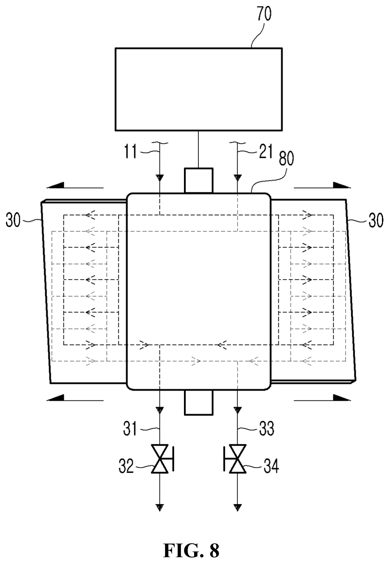

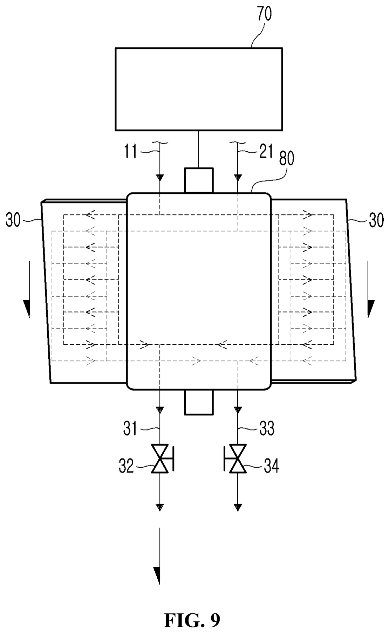

FIGS. 8 and 9 are diagrams for describing the movement and discharge of a liquid reactant in a fuel cell module.

Referring to FIG. 9, the product (e.g., liquefied water) may be generated inside the stack 30 and then moved to the other side of the stack 30 (e.g., in the direction of the arrow) by centrifugal force caused by the rotation of the rotating body 80. In this case, the product may be discharged from the stack 30 to the outside (e.g., in the arrow direction) by opening the cathode and the anode purge valves 32.

In general, in the case of an existing fuel cell system, because the fluid flow due to a fluid inside the stack is small during dead-end operation, the generated liquid water stagnates while covering the catalyst of the electrode membrane inside the stack. In order to solve this problem, a recirculating blower or an ejector is used to artificially generate a flow of a fluid inside the stack to move the liquid water on the electrode from the electrode to the outside of the stack. In this case, an additional component is added and an additional operating method of controlling the additional component is added, which makes the system complicated, increases the weight, and complicates the control. However, in the case of the present invention, when a centrifugal force is generated by changing the number of rotations of the rotating body, water generated inside the stack is moved to one side of the stack due to the centrifugal force and the electrode easily secures an area required for the reaction, thereby improving performance and durability.

The fuel cell system 1 may include a control unit for controlling a driving unit 70, and a humidity sensor, a temperature sensor, and a pressure sensor capable of detecting reactants and products. In this case, the humidity may be measured by a sensor and may also be measured by another measurement method (e.g., a method using impedance or using an electrochemical method, and a method calculated based on other parameters such as temperature and pressure).

The control unit may acquire a sensing value of each sensor and generate a control signal capable of controlling the driving unit 70. Specifically, the control unit may detect a product in the stack 30 by a humidity sensor, a temperature sensor, and a pressure sensor and predict the product in the stack through calculation. When a numerical value greater than or equal to a preset numerical value is sensed, measured, or calculated, the control unit may operate the driving unit 70.

In addition, the control unit may generate a control signal capable of adjusting the angle of the stack 30 based on a user's input or sensing values of sensors. In addition, when the sum of the currents generated in the stack 30 reaches a predetermined criterion, the control unit may operate the driving unit 70 and open the purge valves 32 and 34 to discharge the reactant and the product to the outside.

The fuel cell system 1 of the present invention may move the liquefied water generated at the cathode and the liquid water present in the anode to one side of the separator plate within the stack 30 or the stack through centrifugal force, and quickly remove the liquefied water and the liquid water by opening the cathode and anode purge valves 32.

In general, in the case of an existing fuel cell stack, the liquefied water generated through the reaction is removed by adjusting the operating condition, temperature, pressure, flow rate, and the like of the stack, and by optimizing the structure of the separator plate. In addition, the recirculation blower or the ejector is used to artificially generate the flow of fluid within the stack to move the liquid water on the electrode from the electrode to the outside of the stack. However, this requires complicated operating conditions, which makes control difficult, and necessitates a separator plate structure, which complicates design and increases manufacturing costs. An additional component is added and an additional operation method of controlling the additional component is added, which makes the system complicated, increases the weight, and complicates the control. In addition, in order to cool the fuel cell stack and system, heavy and bulky components such as a pump, a valve, an ion eliminator, and a cooling water pipe required for cooling are required, which increases the weight of the fuel cell system and makes control difficult.

Therefore, in the fuel cell system 1 of the present invention, the liquefied water is moved to one side using the centrifugal force and removed through the opening of the cathode purge valve 32 and the anode purge valve 34, so that a separator plate having a complex structure need not be used, thereby reducing the price and weight of the stack and simplifying design of a control program and a controller.

The separator plate is the most numerous and most expensive component in the fuel cell. In addition, since the cooling of the fuel cell stack through rotation is controlled by the flow of air using a centrifugal force, the air supply system and the cooling system present in the existing fuel cell system can be removed. This can reduce the price and weight of the fuel cell system and allows for simple system and control program design, which makes it suitable as a fuel cell used for aviation. In addition, the separator plate inside the fuel cell module of the present invention does not require a complex channel, and thus has a simple structure, thereby reducing the design and manufacturing costs of the stack.

The fuel cell module of the present invention may also be applied to a propulsion device using a fuel cell. Specifically, the propulsion device using the fuel cell may include a fuel supply tank, a fuel cell module, a motor, and a propeller.

The fuel and oxidizer supply tank may include an oxidizer tank and a hydrogen tank. The fuel and oxidizer supply tank may supply oxygen and hydrogen to the fuel cell module. The fuel cell module may generate energy using the supplied oxygen and hydrogen. The motor may be supplied with energy generated by the fuel cell module.

The propeller may be connected to the motor and rotated by the motor to provide propulsion to the propulsion device. In addition, the rotating body included in the fuel cell module may be connected to a motor to receive rotational force. In addition, the rotating body may include one or more stacks whose positions are changed by rotation of the rotating body. Accordingly, by applying the fuel cell module of the present invention to a propulsion device, a propulsion device using a fuel cell that can be made lightweight and miniaturized and efficiently removing a product (liquid water) can be provided.

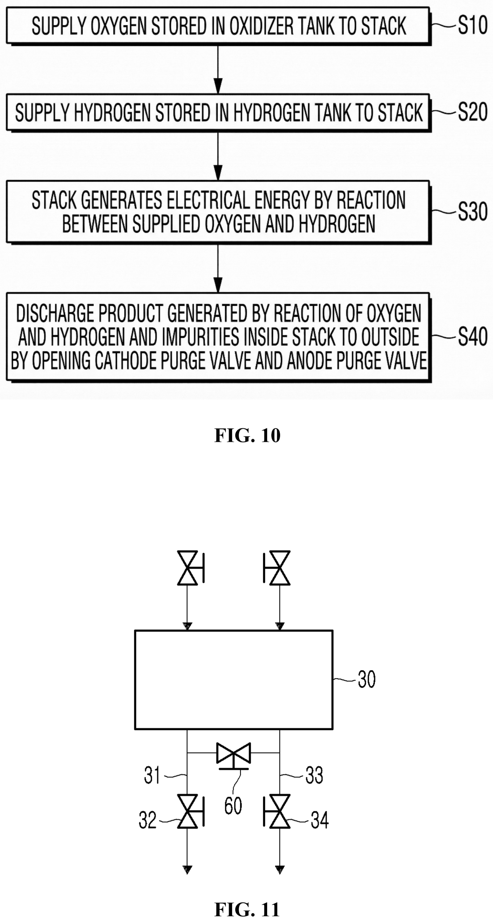

An operating method of a fuel cell system according to the present invention will be described with reference to FIG. 10. In addition, since the operating method of the fuel cell system relates to the operating method using the above-described fuel cell system, the above-described fuel cell system and FIGS. 1 to 9 may be referred to for the description of each configuration and operation.

First, oxygen stored in the oxidizer tank 10 may be supplied to the stack 30 (S10). In this case, the oxygen may be pure or impure. In addition, as described above, air may be supplied to the stack 30 by the rotation of the rotating body and the stack 30, and air may also be supplied by one or more of the oxidizer tank 10, the air blower, and the air compressor.

Next, hydrogen stored in the hydrogen tank 20 may be supplied to the stack 30 (S20). In this case, the hydrogen may pure or impure.

Meanwhile, the order of S10 and S20 may be reversed.

Next, the stack 30 may generate electrical energy by a reaction between the supplied oxygen and hydrogen (S30).

Next, a product generated by the reaction of oxygen and hydrogen and impurities, such as nitrogen, inside the stack 30 may be discharged to the outside by opening the cathode purge valve 32 and the anode purge valve 34 (S40).

FIG. 11 is a block diagram illustrating a fuel cell system according to another embodiment of the present invention. As illustrated, the fuel cell system may include a cathode discharge line 31 and an anode discharge line 33 capable of discharging liquefied water, and a cathode purge valve 32 and an anode purge valve 34 capable of controlling the opening and closing of the cathode discharge line 31 and the anode discharge line 33.

The fuel cell system may include a bypass valve 60 for adjusting a pressure difference between the anode and the cathode. In this case, one side of the bypass valve 60 may be connected to the cathode discharge line 31, which is a path through which the product is discharged from the cathode, and the other side of the stack purge valve 60 may be connected to the anode discharge line 33, which is a path through which the product is discharged from the anode. A pressure difference between the cathode discharge line 31 and the anode discharge line 33 may be adjusted by the bypass valve 60.

According to the fuel cell system according to an embodiment of the present invention described above, air supply, cooling of the stack, and water removal can be simultaneously performed using a rotational force, thereby achieving the effect of a simplified structure and cost reduction.

Although embodiments have been described above with reference to the limited embodiments and drawings, various modifications and variations can be made by those skilled in the art from the above description. For example, appropriate results may be achieved even when the described techniques are performed in a different order than the described methods, and/or when components of the described systems, structures, devices, circuits, and the like are coupled or combined in a different form than the described methods or replaced with or substituted by other components or equivalents.

Therefore, other implementations, other embodiments, and equivalents to the claims also fall within the scope of the claims to be described below.

Research by Support of Business Development Project Technology Development Project of Small and Medium Venture Company [RS-2024-00437505]

### Description of reference numerals

| | | | |
|---|---|---|---|
| 1: | fuel cell system | | |
| 10: | oxidant tank | 11: | oxygen supply line |
| 12: | oxygen supply valve | 13: | oxygen pressure reducing valve |
| 20: | hydrogen tank | 21: | hydrogen supply line |
| 22: | hydrogen supply valve | 23: | hydrogen pressure reducing valve |
| 30: | stack | 31: | cathode discharge line |
| 32: | cathode purge valve | 33: | anode discharge line |
| 34: | anode purge valve | | |
| 50: | cooling fan | | |
| 60: | bypass valve | | |
| 70: | driving unit | | |
| 80: | rotating body | | |

## Claims

1. A fuel cell module comprising:
a rotating body; and
one or more stacks that are radially connected to the rotating body and of which positions are changed by rotation of the rotating body.

2. The fuel cell module of claim 1, wherein the one or more stacks are obliquely connected to the rotating body.

3. The fuel cell module of claim 1, wherein the one or more stacks include a first stack and a second stack, and the first stack and the second stack are disposed parallel to each other.

4. The fuel cell module of claim 1, wherein the one or more stacks include a first stack and a second stack, and the first stack and the second stack are disposed obliquely to each other.

5. The fuel cell module of claim 1, wherein the one or more stacks include a first stack and a third stack, and the first stack is located higher than the third stack based on a rotation axis of the rotating body.

6. The fuel cell module of claim 5, wherein the one or more stacks include a second stack that is parallel to the first stack and located higher than the third stack, and the third stack is located between the first stack and the second stack on a first axis perpendicular to a rotation axis of the rotating body.

7. The fuel cell module of claim 1, wherein the one or more stacks include a discharge line through which liquid moved in a first direction is discharged by the rotation of the rotating body, and the first direction is away from the center of the rotating body.

8. The fuel cell module of claim 7, further comprising a valve configured to discharge the liquid discharged from the discharge line to the outside

9. The fuel cell module of claim 2, wherein the one or more stacks are rotatably connected to one surface of the rotating body and configured to adjust an angle formed with a ground.

10. The fuel cell module of claim 1, wherein the one or more stacks are disposed around the rotating body to surround an outer circumferential surface of the rotating body.

11. The fuel cell module of claim 1, wherein the one or more stacks are connected to the rotating body in a direction in which the one or more stacks gather toward an upper portion or a lower portion of the rotating body.

12. A fuel cell system comprising:
a fuel cell module that receives an oxidizer and hydrogen and generates electrical energy; and
a motor that receives energy generated by the fuel cell module,
wherein the fuel cell module includes:
a rotating body; and
one or more stacks that are radially connected to the rotating body and of which positions are changed by rotation of the rotating body.

13. A propulsion device using a fuel cell, comprising:
a fuel cell module that receives an oxidizer and hydrogen and generates electrical energy;
a motor that receives energy generated by the fuel cell module; and
a propeller connected to the motor to provide a driving force,
wherein the fuel cell module includes:
a rotating body connected to the motor; and
one or more stacks that are radially connected to the rotating body and of which positions are changed by rotation of the rotating body.

14. A fuel cell system comprising:
a hydrogen tank in which gaseous or liquid hydrogen is stored;
a rotating body; and
a stack connected to an outer surface of the rotating body, wherein air is supplied to the stack by rotation of the rotating body and the stack, and hydrogen is supplied from the hydrogen tank to generate electrical energy.

15. The fuel cell system of claim 14, wherein, as the number of rotations of the rotating body increases, an amount of air supplied to the stack increases.

16. The fuel cell system of claim 14, wherein air is supplied to the stack to cool the stack.

17. The fuel cell system of claim 16, wherein, as the number of rotations of the rotating body increases, a cooling amount of the stack increases.

18. A fuel cell system comprising:
an oxidizer supply unit including one or more of an oxidizer tank, an air blower, and an air compressor;
a hydrogen tank in which gaseous or liquid hydrogen is stored;
a rotating body; and
a stack connected to an outer surface of the rotating body, wherein an oxidizer is supplied to the stack by the oxidizer supply unit, and hydrogen is supplied from the hydrogen tank to generate electrical energy,
wherein air is supplied to the stack by rotation of the rotating body and the stack to cool the stack.

19. The fuel cell system of claim 18, wherein the oxidizer supply unit includes an oxidizer tank,
a first pressure control valve for adjusting a pressure of the oxidizer is disposed between the oxidizer tank and the stack, and
a second pressure control valve for adjusting a pressure of the hydrogen is disposed between the hydrogen tank and the stack.

20. The fuel cell system of claim 18, wherein, as the number of rotations of the rotating body increases, a cooling amount of the stack increases.

21. A fuel cell system comprising:
a hydrogen tank in which gaseous or liquid hydrogen is stored;
a rotating body;
a stack connected to an outer surface of the rotating body, wherein air is supplied to the stack by rotation of the rotating body and the stack, and hydrogen is supplied from the hydrogen tank to generate electrical energy; and
one or more purge valves connected to the stack to discharge a product according to a reaction of oxygen and hydrogen from the stack to the outside.

22. A fuel cell system comprising:
an oxidizer supply unit including one or more of an oxidizer tank, an air blower, and an air compressor;
a hydrogen tank in which gaseous or liquid hydrogen is stored;
a stack that generates electrical energy when oxygen and hydrogen are supplied from the oxidizer supply unit and the hydrogen tank, respectively; and
one or more purge valves connected to the stack to discharge a product according to a reaction of oxygen and hydrogen from the stack to the outside.

23. The fuel cell system of claim 21 or 22, wherein the stack is provided as one or more stacks.

24. The fuel cell system of claim 22, further comprising:
a driving unit that provides a rotational force; and
a rotating body that is rotatable by a rotational force of the driving unit,
wherein one side of the stack is radially provided outside the rotating body.

25. The fuel cell system of claim 21 or 24, wherein the product is generated inside the stack, then moved to one side of the stack or the separator plate inside the stack by the rotation of the rotating body, discharged from the stack by opening the purge valve, and then discharged to the outside through the purge valve.

26. The fuel cell system of claim 21 or 24, wherein one side of the stack is provided to be inclined in a diagonal direction to the outside of the rotating body.

27. The fuel cell system of claim 21 or 22, further comprising a cathode discharge line and an anode discharge line connected to the stack,
wherein the purge valve includes a cathode purge valve and an anode purge valve which are provided in the cathode discharge line and the anode discharge line, respectively, and are adjustable to open or close.

28. An operating method of a fuel cell system, comprising:
supplying an oxidizer and hydrogen to a stack;
generating electrical energy by a reaction between the supplied oxidizer and hydrogen in the stack; and
discharging a product generated by being liquefied by the reaction of the oxidizer and the hydrogen within the stack and impurities to the outside by opening a cathode purge valve and an anode purge valve.

29. A fuel cell system comprising:
a first tank in which an oxidizer is stored;
a second tank in which hydrogen is stored;
a stack that includes a cathode to which an oxidizer is supplied from the first tank and an anode to which hydrogen is supplied from the second tank, and generates electrical energy based on a reaction of the oxidizer supplied to the cathode and hydrogen supplied to the anode;
one cathode purge valve configured to discharge a product generated in the cathode according to the reaction; and
one anode purge valve configured to discharge a product generated in the anode according to the reaction.

30. The fuel cell system of claim 29, wherein the cathode purge valve is connected to a first path through which the product is discharged from the cathode, and the anode purge valve is connected to a second path through which the product is discharged from the anode.

31. The fuel cell system of claim 30, wherein the first path extends to the first tank and the second path extends to the second tank, and
the first path includes a first pressure control valve for adjusting a pressure of the cathode, and the second path includes a second pressure control valve for adjusting a pressure of the anode.

32. The fuel cell system of claim 31, further comprising a processor configured to control at least one of the first pressure control valve and the second pressure control valve such that an intensity difference between the pressure of the anode and the pressure of the cathode does not exceed a predetermined value.

33. The fuel cell system of claim 29, wherein the stack includes a first stack and a second stack, and
the first tank and the second tank are connected to the first stack and the second stack, respectively.

34. The fuel cell system of claim 29, further comprising:
a driving unit that provides a rotational force; and
a rotating body rotatable by a rotational force of the driving unit
wherein at least a portion of the product is separated from the stack according to the rotation of the rotating body.

35. The fuel cell system of claim 34, wherein an angle formed by the rotation axis of the rotating body and the stack is adjustable.
